(19) Europäisches Patentamt
European Patent Office
Office européen des brevets

(11) Veröffentlichungsnummer: **0 402 509 A1**

# (12) EUROPÄISCHE PATENTANMELDUNG

(21) Anmeldenummer: **89110886.2**

(51) Int. Cl.[5]: **C03C 17/32, G01N 30/60**

(22) Anmeldetag: **15.06.89**

(43) Veröffentlichungstag der Anmeldung:
**19.12.90 Patentblatt 90/51**

(84) Benannte Vertragsstaaten:
**DE**

(71) Anmelder: **Siemens Aktiengesellschaft**
**Wittelsbacherplatz 2**
**D-8000 München 2(DE)**

Anmelder: **MICROQUARTZ GESELLSCHAFT FÜR QUARZGLASKOMPONENTEN MBH**
**Kistlerhofstrasse 243**
**D-8000 München 70(DE)**

(72) Erfinder: **Douklias, Nikolaos, Dr.**
**Margaritenweg 12**
**D-8011 Kirchheim(DE)**
Erfinder: **Hammerschmidt, Albert, Dr.**
**Coburger Strasse 47a**
**D-8520 Erlangen(DE)**

(74) Vertreter: **Fuchs, Franz-Josef, Dr.-Ing. et al**
**Postfach 22 13 17**
**D-8000 München 22(DE)**

## (54) Quarzglaskapillaren für Trennsäulen in der Gaschromatographie.

(57) Quarzglaskapillaren mit einer Außenbeschichtung für Trennsäulen in der Gaschromatographie erfüllen dann die an sie gestellten Forderungen hinsichtlich mechanischer und thermischer Belastbarkeit sowie Transparenz, wenn die Außenbeschichtung aus Polyethersulfon besteht.

EP 0 402 509 A1

## Quarzglaskapillaren für Trennsäulen in der Gaschromatographie

Die Erfindung betrifft Quarzglaskapillaren mit einer Außenbeschichtung für Trennsäulen in der Gaschromatographie.

Bei der Gaschromatographie (GC), einem Verfahren zur Trennung von gasförmigen oder verdampfbaren Stoffgemischen, bzw. in Gaschromatographen finden Trennsäulen Verwendung, welche die sogenannte stationäre Phase, eine hochsiedende Flüssigkeit, aufnehmen; diese Trennflüssigkeit befindet sich auf einem indifferenten Träger, beispielsweise auf der Innenwand von Kapillaren. Derzeit werden dabei fast ausschließlich Kapillarsäulen, auch Golay-Säulen genannt, verwendet, die aus Natron- oder Kaligläsern bzw. aus reinem Quarzglas bestehen.

Während Kapillaren bzw. Kapillarsäulen aus Natron- und Kaligläsern einerseits relativ dick und sehr zerbrechlich sind und andererseits ihr Einsatz - materialbedingt - nicht immer zu einer zufriedenstellenden Trennung der Stoffe bzw. von deren Erkennungssignalen führt, gelang mit der Entwicklung und dem Einsatz von Quarzglaskapillaren ein entscheidender Durchbruch in der Analytik und insbesondere in der Gaschromatographie. Quarzglaskapillaren zeichnen sich nämlich insbesondere durch eine hervorragende Trennleistung und Flexibilität aus; dementsprechend steigt ihr Einsatz in der Gaschromatographie ständig an - zu Lasten von Glaskapillaren der genannten Art.

Im Gegensatz zu Trennsäulen aus Natron- und Kaliglas, die relativ dick und unbiegsam sind, ist es bei Quarzglaskapillaren erforderlich, diese mit einer Außenbeschichtung zu versehen, um eine ausreichende mechanische Festigkeit zu gewährleisten. Dazu dienen insbesondere Polyimide, welche die Forderung einer thermischen Belastbarkeit bis ca. 350 °C erfüllen. Außer Polyimiden, d.h. Kunststoffen, können auch Metalle, insbesondere Aluminium, als Beschichtungsmaterialien eingesetzt werden.

Aufgrund der Außenbeschichtung ergibt sich bei Quarzglaskapillaren, die an sich transparent sind, aber das Problem einer mangelnden Durchsichtigkeit. Bei einer Metallbeschichtung ist eine Einblickmöglichkeit in das Innere der Kapillaren ohnehin nicht gegeben; bei einer Kunststoffbeschichtung ergibt sich die mangelnde Durchsichtigkeit aus der Tatsache, daß die verwendeten Kunststoffe, die nach dem Aufbringen auf die Kapillaren in fester Form vorliegen, relativ stark gefärbt sind.

Eine Durchsichtigkeit bzw. Transparenz der Quarzglaskapillaren ist jedoch insbesondere bei der sogenannten inneren Behandlung, d.h. bei der Belegung mit der stationären Phase, von Bedeutung. Bei nicht durchsichtigen Kapillaren kommt es in der Praxis häufig vor, daß Trennsäulen nicht brauchbar sind bzw. unbrauchbar werden, weil der Belegungsvorgang - und damit die Belegungsqualität - visuell nicht ständig kontrolliert werden kann. Dies führt, neben der Unbrauchbarkeit der Trennsäule, aber auch zu einem großen Zeitverlust, da der Belegungsvorgang nicht frühzeitig abgebrochen werden kann und auch keine anderen Maßnahmen ergriffen werden können.

Aufgabe der Erfindung ist es, Quarzglaskapillaren der eingangs genannten Art, welche eine Außenbeschichtung aufweisen, derart auszugestalten, daß sie nicht nur die Forderungen nach einer mechanischen und thermischen Belastbarkeit erfüllen, sondern auch transparent sind.

Dies wird erfindungsgemäß dadurch erreicht, daß die Außenbeschichtung aus Polyethersulfon besteht.

Bei den Quarzglaskapillaren nach der Erfindung ist eine vollkommene optische Transparenz gegeben. Bei diesen Kapillaren bleibt nämlich die Kunststoff-Außenbeschichtung aus Polyethersulfon auch bei längerer Temperaturbelastung, beispielsweise zwei Tage bei 280 °C, transparent; außerdem bilden die Kunststoffüberzüge keine Risse und haften auf dem Quarzglas sehr gut. Deshalb ist beim Belegen der Kapillaren mit der Trennflüssigkeit eine gute optische Kontrolle möglich.

Da Polyethersulfone nicht nur thermisch stabil sind, sondern auch gute mechanische Eigenschaften aufweisen, ist auch eine ausreichende mechanische Festigkeit der Quarzglaskapillaren nach der Erfindung gewährleistet. Darüber hinaus sind Polyethersulfone, die kommerziell verfügbar sind, viel kostengünstiger als beispielsweise Polyimide, die oft für Mikroelektronikanwendungen mit speziellen Anforderungen, insbesondere hinsichtlich der Reinheit, hergestellt werden.

Bei den Quarzglaskapillaren nach der Erfindung dienen zur Aussenbeschichtung Polyethersulfone (PES), d.h. Ether- und Sulfongruppen aufweisende Polymere; derartige Polymere werden oft einfach auch als Polysulfone (PSU) bezeichnet. Bevorzugt werden dabei Verbindungen mit aromatischen Resten, sogenannte Polyarylsulfone, insbesondere Polyphenylensulfone (PPSU). Vorzugsweise finden zur Außenbeschichtung der Kapillaren nach der Erfindung Polymere mit folgenden wiederkehrenden Einheiten Verwendung:

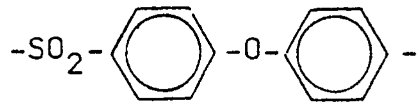 (1),

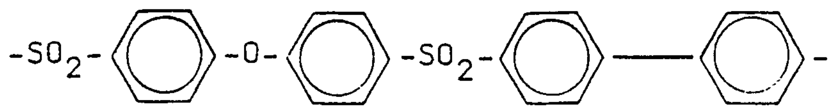 (2) oder

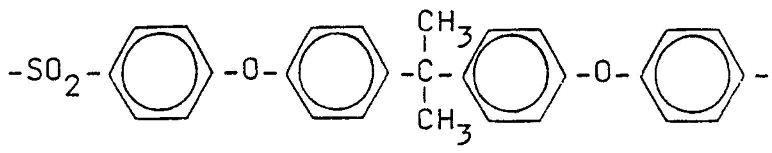 (3) .

Das Polyethersulfon der Struktur (1) kann auch wechselnde Mengen eines Polymeren mit folgenden Struktureinheiten enthalten:

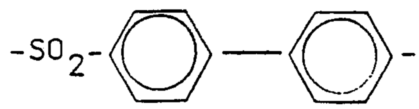 .

Die Außenbeschichtung, d.h. die äußere Beschichtung der Quarzglaskapillaren aus Polyethersulfon, besitzt vorteilhaft eine Dicke etwa zwischen 15 und 30 µm. Gegebenenfalls kann die Dicke der Kunststoffbeschichtung auch Werte außerhalb dieses Bereiches annehmen.

Anhand eines Ausführungsbeispieles soll die Erfindung noch näher erläutert werden.

In einer Ziehanlage wird ein Rohr aus Quarzglas, nach sorgfältiger Reinigung in einem Ultraschallbad, mit Hilfe eines Motors kontinuierlich in einen HF-Ofen abgesenkt. Bei einer Ofentemperatur von ca. 1800 °C wird dabei aus dem im der Heizzone befindlichen Rohrende eine dünne Quarzglaskapillare gezogen. Diese Kapillare wird anschließend durch eine Beschichtungsvorrichtung sowie einen elektrisch beheizten Rohrofen geführt und dann auf eine Ziehtrommel gewickelt; vorteilhaft sind wenigstens zwei derartige Anordnungen aus Beschichtungsvorrichtung und Rohrofen vorgesehen, die hintereinandergeschaltet werden. Die Rohrofentemperatur beträgt ca. 600 °C, bei einer Ziehgeschwindigkeit von ca. 5 m/min. Vor der (ersten) Beschichtungsvorrichtung und nach dem (letzten) Rohrofen wird die Dicke der Kapillare mit einem geeigneten Meßgerät kontrolliert.

Zur Beschichtung dient eine Lösung eines Polyethersulfons in einem geeigneten Lösungsmittel. Dies ist beispielsweise eine Lösung von 5 g eines handelsüblichen Polyethersulfons der vorstehend angegebenen Struktur (1) in 10 g N-Methylpyrrolidon, die vor Gebrauch durch ein 8 µm-Filter druckfiltriert wird. Mit einer derartigen Lösung wird eine Außenbeschichtung der Kapillaren mit einer Dicke von ca. 20 bis 25 µm erhalten.

## Ansprüche

1. Quarzglaskapillaren mit einer Außenbeschichtung für Trennsäulen in der Gaschromatographie, **dadurch gekennzeichnet,** daß die Außenbeschichtung aus Polyethersulfon besteht.

2. Quarzglaskapillaren nach Anspruch 1, **dadurch gekennzeichnet,** daß das Polyethersulfon folgende Struktureinheiten aufweist:

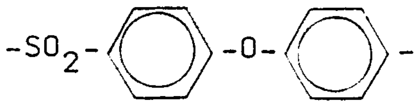
,

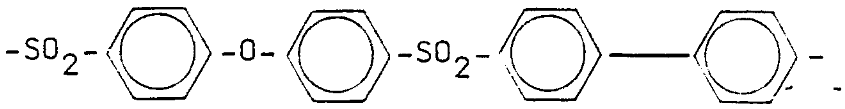
oder

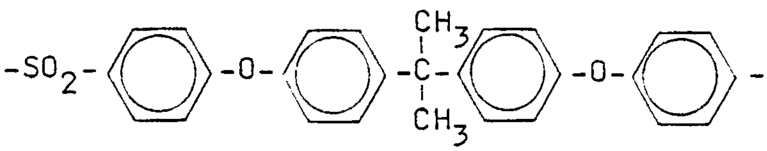
.

3. Quarzglaskapillaren nach Anspruch 1 oder 2, **dadurch gekennzeichnet,** daß die Außenbeschichtung eine Dicke etwa zwischen 15 und 30 µm besitzt.

Europäisches Patentamt

# EUROPÄISCHER RECHERCHENBERICHT

Nummer der Anmeldung

EP 89 11 0886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 048 106 (HEWLETT-PACKARD)<br>* Patentansprüche 1,9; Seite 2, linke Spalte, Zeilen 81-105 * | 1-3 | C 03 C 17/32<br>G 01 N 30/60 |
| Y | CHEMICAL ABSTRACTS, Band 107, Nr. 18, November 1987, Seite 372, Zusammenfassung Nr. 160100p, Columbus, Ohio, US; & JP-A-62 105 108 (HITACHI)<br>* Zusammenfassung * | 1-3 | |
| Y | EP-A-0 004 136 (ICI)<br>* Patentansprüche 1-5; Seite 16, Zeilen 14-29 * | 1-3 | |
| A | DE-A-3 432 806 (SIEMENS AG)<br>* Figur 1; Patentansprüche * | 1 | |

RECHERCHIERTE SACHGEBIETE (Int. Cl.5)

C 03 C<br>
G 01 N<br>
C 08 J<br>
C 09 D<br>
C 08 L

Der vorliegende Recherchenbericht wurde für alle Patentansprüche erstellt

| Recherchenort | Abschlußdatum der Recherche | Prüfer |
|---|---|---|
| DEN HAAG | 14-02-1990 | BOUTRUCHE J.P.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)